# EUROPÄISCHE PATENTSCHRIFT

(11) **EP 0 729 867 B1**
(45) Veröffentlichungstag und Bekanntmachung des Hinweises auf die Patenterteilung: **02.06.1999**
(21) Anmeldenummer: 96106364.1
(22) Anmeldetag: 18.03.1994
(51) Int. Cl.: B60R 21/13

(54) **Überrollschutz-Vorrichtung für ein Kraftfahrzeug**
Rollover protection device
Dispositif à arceau de sécurité pour véhicule automobile

(30) Priorität: 03.05.1993 DE 4314538
(43) Veröffentlichungstag der Anmeldung: 04.09.1996
(62) Teilanmeldung aus: 94104336.6
(73) Patentinhaber: Bayerische Motoren Werke Aktiengesellschaft, 80788 München (DE)
(72) Erfinder: Heiner, Lothar, 80933 München (DE)

(56) Entgegenhaltungen:
- EP-A- 0 500 261
- DE-A- 3 905 470
- DE-A- 3 930 171

## Beschreibung

Die Erfindung bezieht sich auf eine Überrollschutz-Vorrichtung nach dem Oberbegriff des Patentanspruches 1.

Eine bekannte derartige Überrollschutz-Vorrichtung (DE-A 39 30 171) ist an der Rückenlehne eines Fahrzeugsitzes angeordnet. Die Bügel-Schenkel sind im Inneren von sitzfesten Standrohren verschiebbar. Die Ausstoßfedem stützen sich mit ihren unteren Enden am oberen Endbereich der Standrohre ab, was insbesondere in vertikaler Richtung einen vergrößerten Raumbedarf bedingt. Dies würde bei der Integration der vorbekannten Bauweise in eine Fahrzeugkarosserie große Schwierigkeiten bereiten.

Die Haltevorrichtung, die den federbelasteten Überrollbügel in seiner Ruhestellung hält, umfaßt zwei Klinken, die an einem Bolzen an den unteren Endabschnitten des Überrollbügels angreifen. Die Klinken sind an ihren anderen Enden durch die zwei Teile eines Kniehebels miteinander verbunden, an dem andererseits ein Verbindungsbügel über ein Langloch angreift. Der Verbindungsbügel ist mit dem Anker eines Elektromagneten verbunden. Wegen der Vielzahl der Einzelteile und der Gelenkverbindungen, einschließlich einer Langloch-Gelenkverbindung, ist eine sichere Arbeitsweise der Haltevorrichtung fraglich. Beim Einschieben des Überrollbügels erscheint ein sicheres Verriegeln des eingeschobenen Bügels schwierig, insbesondere wenn Bauteiltoleranzen oder im Fall einer Fahrzeugkarosserie etwaige erwindungen des Fahrzeugkörpers ausgeglichen werden müssen.

Der Erfindung liegt die Aufgabe zugrunde, eine Überrollschutz-Vorrichtung der vorausgesetzten Gattung zu schaffen, die zuverlässig arbeitet und trotzdem vergleichsweise wenig Bauteile aufweist.

Diese Aufgabe wird erfindungsgemäß durch die im Patentanspruch 1 angegebenen Merkmale gelöst. Die schwenkbare Haltewippe kann wegen ihrer Schwenkbarkeit auch dann mit dem am Gehäuse gelagerten Halteriegel in Eingriff kommen, wenn größere Toleranzabweichungen vorliegen oder das Fahrzeug, beispielsweise auf einer unebenen Grundfläche, einen etwas verwundenen Karosseriekörper hat. Bei geeigneter Führung der Haltewippe ist stets ein sicherer Eingriff in der Ruheposition, aber auch ein sicheres Lösen des Überrollbügels in einer Überschlagsituation gewährleistet.

Weitere vorteilhafte Weiterbildungen der Erfindung sind Gegenstand von Unteransprüchen.

Die Erfindung ist im folgenden anhand eines in der Zeichnung dargestellten Ausführungsbeispiels näher erläutert. Es zeigt:
- Fig. 1: eine perspektivische Ansicht eines Teils der Überrollschutz-Vorrichtung mit den angrenzenden Blechteilen einer Pkw-Karosserie;
- Fig. 2: eine entsprechende, etwas vergrößerte Teilansicht, jedoch auch mit angedeuteten Verkleidungsteilen;
- Fig. 3: eine weitere Ansicht einer Überrollschutz-Vorrichtung mit ausgefahrenem Bügel;
- Fig. 4: eine vergrößerte Detaildarstellung der Halteeinrichtung für den eingefahrenen Überrollbügel;
- Fig. 5: eine Ausschnittdarstellung der Fig. 4 etwa zum Zeitpunkt des Lösens der Halteeinrichtung;
- Fig. 6: die gelöste Halteeinrichtung;
- Fig. 7: die Sperrvorrichtung für den ausgefahrenen Überrollbügel;
- Fig. 8: eine Darstellung der Einzelteile der Überrollschutz-Vorrichtung und
- Fig. 9: einen Schnitt nach der Linie IX-IX in Fig. 8.

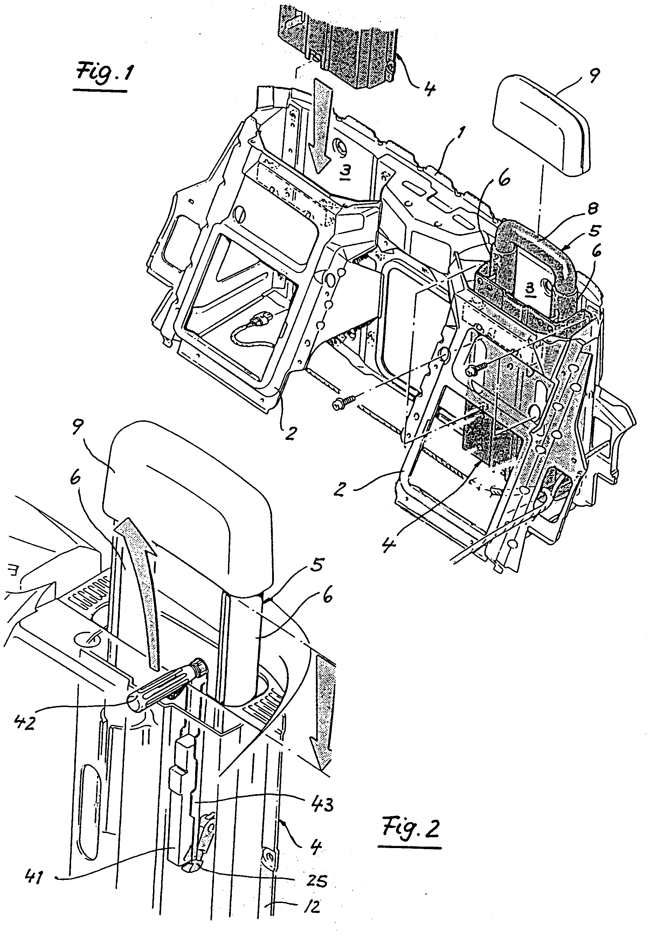

In Fig. 1 der Zeichnung ist eine Querwand 1 eines Cabriolets dargestellt, die etwa lotrecht hinter den rückwärtigen Sitzen in der Karosserie angeordnet ist. Zwischen dieser Querwand 1 und nach vorne unten gerichteten Blech-Rahmenteilen 2 zur Abstützung von Rücksitzen ist ein von oben zugänglicher Raum 3 geschaffen, der jeweils zur Aufnahme eines linken und eines rechten kassettenähnlichen Gehäuses 4 dient. In jedem Gehäuse 4 ist ein U-förmiger Überrollbügel translatorisch verlagerbar aufgenommen, der aus einer in Fig. 1 ersichtlichen abgesenkten Ruhelage in eine über die Fahrzeugbrüstung nach oben überstehende, in Fig. 3 ersichtliche Stützlage verlagerbar ist. Aus der Stützlage kann er nach Lösen einer Verriegelungsvorrichtung von Hand wieder in die Ruhelage zurückbewegt werden.

Die etwa vertikal gerichteten Schenkel 6 werden nach Lösen einer die Überrollbügel 5 in der Ruhelage fixierenden Haltevorrichtung - gesteuert durch einen Überschlag-Sensor - unter der Wirkung von Fedem 7 in Zehntelsekunden so weit aus dem Gehäuse ausgeschoben und dann verriegelt, daß sie ihre für den Fall eines Überschlags erforderliche Schutzfunktion ausüben können. Die beiden Schenkel 6 sind durch einen querverlaufenden Steg 8 miteinander verbunden, über den eine gepolsterte Abdeckung 9 geschoben ist.

Die Schenkel 6 des Überrollbügels 5 und im wesentlichen die gesamten Führungselemente der Überrollschutz-Vorrichtung bestehen aus Strangpreßprofilen. Die später noch im einzelnen näher erläuterten Führungselemente sind an dem Gehäuse 4 angeordnet, das im wesentlichen ebenfalls aus einem Strangpreßprofil gebildet ist. Das Gehäuse 4 hat einen zu der Fahrzeugwand 1 hin offenen flachen U-Querschnitt und ist unten durch einen Gehäuseboden 10 verschlossen. Die Ausprägungen 11 an seitlich abstehenden Befestigungsrändern 12 werden gleichzeitig mit dem Ausstanzen der verschiedenen Öffnungen 13, 13' des Gehäuses 4 ausgebildet.

Zur Führung der Überrollbügel 5 sind Standrohre 14 vorgesehen, die an ihrem unteren Ende ein Innengewinde haben und mit geeigneten Schrauben 15 mit dem Gehäuseboden 10 verschraubt werden. Die Standrohre 14 sind ebenfalls durch Strangpressen hergestellt. An ihrem oberen Ende sind sie durch eine am Gehäuse 4 angeordnete Querplatte 16 - ebenfalls aus Strangpreßprofil - gehalten, die über einen Verbindungssteg 17 zwei Aufnahmebuchsen 18 zur horizontalen Abstützung der Standrohre 14 trägt.

Die Schenkel 6 jedes Überrollbügels 5 sind auf ihrer der Querplatte 16 zugewandten Seite mit Längsschlitzen 19 zum Durchtritt der Verbindungsstege 17 versehen. Die unteren Enden der Schenkel 6 jedes Überrollbügels 5 sind durch ein Querjoch 20 fest miteinander verbunden, mit dem eine sehr hohe Stabilität der Bügel, beispielsweise gegen Aufweitung der Schenkelenden, insbesondere aber auch im Hinblick auf die Torsionsfestigkeit erreicht wird. Das Querjoch 20 ist mit den Schenkeln 6 verschraubt und besteht ebenfalls aus einem Strangpreßprofil. An beiden Enden eines Quersteges 21 des Querjochs 20 sind Aufnahmebuchsen 22 vorgesehen, die die Enden der Schenkel 6 fest umschließen und mit diesen Enden verschraubt sind. über einen großen Teil ihrer Länge sind die Aufnahmebuchsen 22 mit nach oben offenen Schlitzen 24 versehen, die sich mit den Schlitzen 19 der Schenkel 6 überdecken.

An dem Quersteg 21 des Querjochs 20 sind ferner parallele vertikale Wangen 23 zur Lagerung einer federbelasteten Sperrklinke 25 angeordnet.

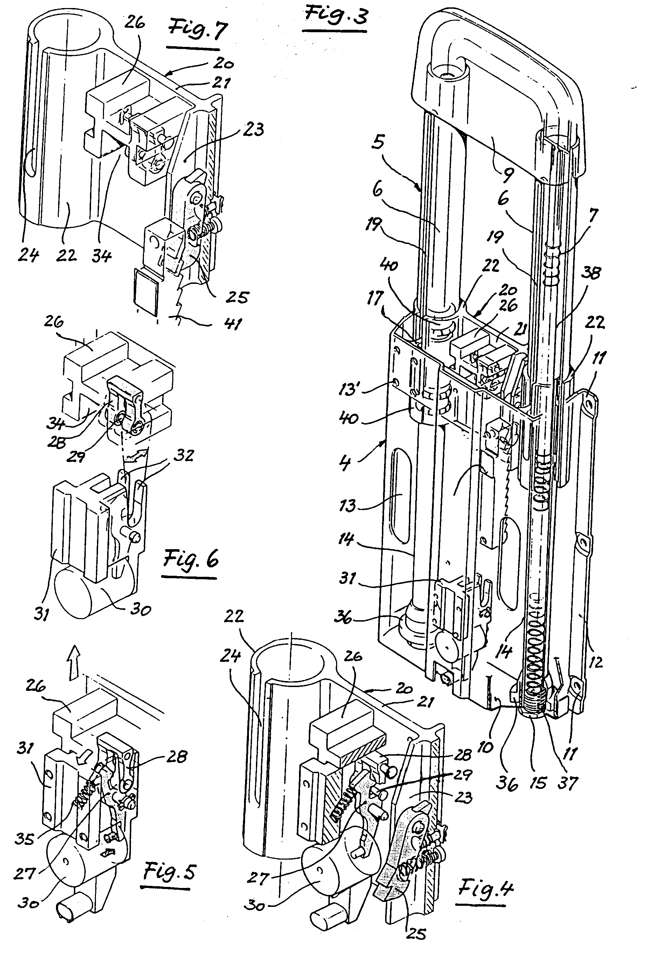

Wie man insbesondere aus den Figuren 4 und 7 erkennt, ist am Quersteg 21 des Querjochs 20 ferner ein Haltebock 26 angeordnet, an dem ein am Gehäuse 4 gelagerter Halteriegel 27 eingreifen kann. Bei dem dargestellten Ausführungsbeispiel ist hierzu am Haltebock 26 um eine Querachse schwenkbar eine Haltewippe 28 gelagert, mit einem Querstift 29, an dem der Halteriegel 27 angreifen kann.

Der schon erwähnte Halteriegel 27 ist in einer am Gehäuse 4 befestigbaren und einen Aktuator 30 tragenden Haltekonsole 31 gelagert, die nach oben offene und sich nach oben erweiternde Schlitze 32 zum Eintritt des unteren Endes der Haltewippe 28 aufweist. Dadurch kann beim manuellen Einschieben des Überrollbügels 5 auch dann ein sicheres Eintreten der Wippe in die den Halteriegel 27 lagernde Konsole gewährleistet werden, wenn auch das Gehäuse 4 aufgrund von geringen Karosseriebewegungen verformt, beispielsweise verwunden wird. Die Schlitze 32 sind in zwei vertikalen Rippen 33 der aus Strangpreßprofil gefertigten Haltekonsole 31 ausgebildet, die bei abgesenktem Überrollbügel 5 in einen nach unten offenen Kanal 34 des Haltebocks 26 eingreifen (Figuren 5 bis 7).

Der bereits mehrfach erwähnte Halteriegel 27 ist durch eine Feder 35 in seine Verriegelungsstellung belastet, die in Fig. 4 gezeigt ist. In diese Verriegelungsstellung kann der Bügel durch manuelles Einschieben gebracht werden. Die in den sich erweiternden Schlitzen 32 dabei geführte Haltewippe 28 läuft gegen eine Anlaufschräge des Halteriegels 27 an und bewegt den Halteriegel 27 mit seinem oberen Ende soweit zur Seite, bis der Querstift 29 in die Halteausnehmung des Halteriegels 27 eintritt. Zum sensorgesteuerten Freigeben der Überrollbügel 5 verlagert der Aktuator 30 das untere Ende des Halteriegels 27 zum Quersteg 21 des Querjochs 20 hin gegen die Wirkung der Feder 35. Sobald der Querstift 29 von dem Verriegelungshebel 27 freikommt, beschleunigen die Federn 27 den Überrollbügel 5 nach oben.

In den Figuren 3 und 8 sind auf den unteren Enden der Standrohre 14 verschiebliche Zentrierkegel 36 dargestellt, die unter der Wirkung einer kürzeren Schraubenfeder 37 nach oben belastet sind. Die Zentrierkegel 36 zentrieren einerseits die unteren Enden der eingeschobenen Überrollbügel 5, andererseits bewirken sie insgesamt auch eine geknickte Federkennlinie in dem Sinn, daß das öffnen durch den Aktuator 30 verbessert und die Anfangsbeschleunigung beim Ausschieben der Überrollbügel 5 erhöht wird.

Aus den Figuren 3 und 8 geht ferner hervor, daß die Ausstoßfedern 7 des Überrollbügels 5 im Inneren der Standrohre 14 angeordnete Schraubenfedern sind und einen Federführungsbolzen 38 umgeben, der oben eine Druckscheibe 39 aufweist.

Vorzugsweise weisen die Standrohre 14 oberhalb und unterhalb der Aufnahmebuchsen 18 der Querplatte 16 Gleitbuchsen 40 für die Schenkel 6 des Überrollbügels 5 auf. Die Schenkel 6 gleiten mit ihren Innenflächen an endseitigen Wülsten der Gleitbuchsen 40.

Wird der Überrollbügel durch Zurückschwenken des Halteriegels 27 freigegeben und von den Federn 7 und 37 nach oben beschleunigt, so läuft am Ende der Hubbewegung die schon beschriebene Sperrklinke 25 auf eine gezahnte Rastleiste 41 auf, die über eine entsprechend ausgebildete Öffnung 13'' im Gehäuse 4 mit einem entsprechenden Vorsprung abgestützt und ferner durch Schrauben an dem Gehäuse 4 befestigt ist. Nach Einrasten der Sperrklinke 25 in einen der Zähne der Rastleiste 41 ist das Querjoch 20 und damit auch der Überrollbügel 5 in seiner nach oben überstehenden Stützlage fixiert. Um die dann erfolgte Verriegelung des Überrollbügels 5 wieder lösen zu können, ist ein mit einem Griff 42 versehener Schieber 43 vorgesehen, der über eine schmale, entsprechend ausgebildete Öffnung von oben über die Zähne der Rastleiste 41 geschoben werden kann und dabei die Sperrklinke 25 von den Zähnen der Rastleiste 41 abhebt. Daraufhin kann dann der Überrollbügel 5 mühelos von Hand in das kassettenähnliche Gehäuse 4 zurückgeschoben werden, bis er dort verriegelt ist.

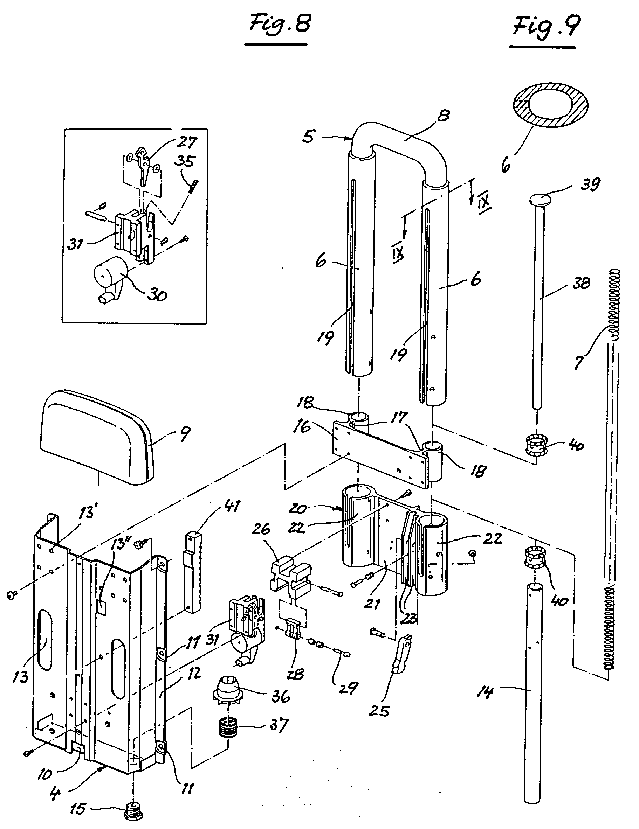

Weil unter anderem auch die Schenkel 6 des Überrollbügels 5 aus Strangpreßprofilen gefertigt sind, ist es ohne weiteres möglich, den Schenkeln des Überrollbügels einen langgestreckten Querschnitt zu geben. Die längere Querschnittsabmessung verläuft dann in der Richtung, in der die größten Belastungen auftreten. Wie man in Fig. 9 erkennt, kann dabei jeder Schenkel 6 im Querschnitt eine etwa ovale Außenform haben. Ferner kann auch die Innenwandung des Schenkels 6 im Querschnitt etwa oval sein oder auch rund. Auf diese Weise lassen sich sehr gezielt Querschnittsanhäufungen realisieren, die eine Optimierung hinsichtlich der Festigkeit zulassen.

Durch die fast ausschließliche Verwendung von Strangpreßprofilen, die ineinandergesteckt sind oder ineinandergleiten, läßt sich darüber hinaus eine erhebliche Gewichtsersparnis erreichen, außerdem eine spürbare Kostenreduzierung bei trotzdem zu gewährleistender Sicherheit. Die Verwendung von Strangpreßprofilen gestattet es schließlich, ohne größeren Werkzeugaufwand das Überrollschutz-System in seiner Höhe zu verändern und so ggf. an verschieden konzipierte Fahrzeugkarosserien anzupassen. Es brauchen lediglich einige der verwendeten Strangpreßprofil-Teile in einer veränderten Länge abgeschnitten zu werden.

## Patentansprüche

1. Überrollschutz-Vorrichtung für ein Kraftfahrzeug, insbesondere für ein Cabriolet, mit einem zumindest annähernd translatorisch aus einer abgesenkten Ruhelage in eine obere Stützlage und zurück verlagerbaren etwa U-förmigen Überrollbügel (5), der mit seinen nach unten gerichteten Schenkeln (6) durch Führungselemente geführt, in Ruhelage durch eine lösbare Haltevorrichtung gehalten, aus dieser Lage durch Federkraft (7) nach oben verlagerbar und oben durch eine Verriegelungseinrichtung festlegbar ist,
dadurch gekennzeichnet, daß die Haltevorrichtung eine am Überrollbügel (5) um eine Querachse schwenkbar gelagerte Haltewippe (28) mit einem Querstift (29) umfaßt, an dem ein am Gehäuse (4) gelagerter Halteriegel (27) angreift.

2. Vorrichtung nach Anspruch 1,
dadurch gekennzeichnet, daß der Halteriegel (27) in einer am Gehäuse (4) befestigbaren und einen Aktuator (30) tragenden Haltekonsole (31) gelagert ist, die nach oben offene und sich nach oben erweiternde Schlitze (32) zum Eintritt der Haltewippe (28) aufweist.

3. Vorrichtung nach Anspruch 2,
dadurch gekennzeichnet, daß die Schlitze (32) in zwei vertikalen Rippen (33) der Haltekonsole (31) ausgebildet sind.

4. Vorrichtung nach Anspruch 1,
dadurch gekennzeichnet, daß der Halteriegel (27) durch eine Feder (35) in die Verriegelungsstellung belastet ist und durch einen Aktuator (30) gegen die Wirkung der Feder (35) in die Freigabestellung bewegbar ist.

5. Vorrichtung nach Anspruch 4,
dadurch gekennzeichnet, daß der Halteriegel (27) ein zweiarmiger Hebel ist und an einem Ende die Feder (35) und am anderen Ende der Aktuator (30) angreift.

6. Vorrichtung nach Anspruch 5,
dadurch gekennzeichnet, daß der Aktuator (30) am unteren Ende des Halteriegels (27) angreift.

7. Vorrichtung nach Anspruch 1,
dadurch gekennzeichnet, daß der Halteriegel (27) eine Anlaufschräge aufweist, gegen die die Haltewippe (28) beim Einschieben des Überrollbügels (5) anläuft und den Halteriegel (27) dabei so weit verschwenkt, bis der Querstift (29) der Haltewippe (28) in die Halteausnehmung des Halteriegels (27) eintritt.

## Claims

1. A roll-over protective structure for a motor vehicle, especially for a convertible, comprising an approximately U-shaped roll bar (5) movable at least approximately in translation from a lowered inoperative position into an upper supporting position and back, the downwardly extending arms (6) of the roll bar being guided by guide elements, held in the inoperative position by a releasable retaining device, movable from the said position upwards by spring force (7), and adapted to be fastened at the top by a locking means,
characterised in that the retaining device is a rocker (28) mounted on the roll bar (5) so as to be pivotable around a transverse axis and comprising a transverse pin (29) which engages a retaining catch (27) mounted on the casing (4).

2. A device according to claim 1,
characterised in that the retaining catch (27) is mounted on a bracket (31) which can be fastened to the casing (4) and bears an actuator (30), the bracket having upwardly open and upwardly widening slots (32) for entry of the rocker (28).

3. A device according to claim 2,
characterised in that the slots (32) are formed in two vertical ribs (33) on the retaining bracket (31).

4. A device according to claim 1,
characterised in that the bolt (27) is biased into the locking position by a spring (35) and is movable by an actuator (30) into the release position against the action of the spring (35).

5. A device according to claim 4,
characterised in that the retaining catch (27) is a two-armed lever and the spring (35) engages at one end and the actuator (30) engages at the other end.

6. A device according to claim 5,
characterised in that the actuator (30) engages the bottom end of the retaining catch (27).

7. A device according to claim 1,
characterised in that the retaining catch (27) has a run-up slope against which the rocker (28) runs when the roll bar (5) is retracted, and pivots the bolt (27) until the transverse pin (29) of the rocker (28) enters the retaining recess in the bolt (27).

## Revendications

1. Dispositif de sécurité de protection contre le renversement d'un véhicule notamment d'un cabriolet, comportant un arceau de sécurité (5) sensiblement en forme de U, mobile au moins sensiblement en translation à partir d'une position de repos abaissée dans une position relevée, d'appui et qui peut être rappelé en position de repos, cet arceau étant guidé par des éléments de guidage avec ses branches (6) dirigées vers le bas, et il est tenu en position de repos par un dispositif de fixation amovible, position d'où il peut être dégagé vers le haut par la force d'un ressort (7), et être fixé en position haute par un dispositif de verrouillage,
caractérisé en ce que
le dispositif de fixation comprend une bascule (28) montée pivotante sur l'arceau de sécurité (5) autour d'un axe transversal et comprenant un goujon transversal (29) sur lequel agit un verrou (27) monté sur le boîtier (4).

2. Dispositif selon la revendication 1,
caractérisé en ce que
le verrou (27) est monté sur une console (31) fixée au boîtier (4) et portant un actuateur (30), cette console ayant des fentes (32) ouvertes vers le haut et allant en s'élargissant vers le haut pour recevoir la bascule de verrouillage (28).

3. Dispositif selon la revendication 2,
caractérisé en ce que
les fentes (32) sont réalisées dans deux nervures verticales (33) de la console (31).

4. Dispositif selon la revendication 1,
caractérisé en ce que
le verrou (27) est chargé par un ressort (35) en position de verrouillage et peut être déplacé en position de libération par un actuateur (30) agissant contre l'action du ressort (35).

5. Dispositif selon la revendication 4,
caractérisé en ce que
le verrou (27) est un levier à deux bras dont une extrémité est soumise à l'action du ressort (35) et l'autre extrémité à l'action de l'actuateur (30).

6. Dispositif selon la revendication 5,
caractérisé en ce que
l'actuateur (30) agit contre l'extrémité inférieure du verrou (27).

7. Dispositif selon la revendication 1,
caractérisé en ce que
le verrou (27) comporte une rampe contre laquelle arrive la bascule (28) lorsqu'on enfonce l'arceau de sécurité (5), et fait basculer le verrou (27) vers l'arrière jusqu'à ce que le goujon transversal (29) de la bascule (28) pénètre dans la cavité de retenue du verrou (27).
